# EUROPEAN PATENT APPLICATION

(11) **EP 2 368 436 A1**
(43) Date of publication of application: **28.09.2011**
(21) Application number: 11425076.4
(22) Date of filing: 24.03.2011
(51) Int. Cl.: A23B 7/005, A23B 7/04, A23B 7/06, A23L 3/22, A23N 12/04

(54) **System and method for different types of simple or complex heat treatment of vegetable products and the like**

(30) Priority: 24.03.2010 IT RM20100132
(71) Applicant: Turatti S.r.l., 30124 Venezia (IT)
(72) Inventor: Turatti, Antonio, 30124 Venezia (IT)
(74) Representative: Iannone, Carlo Luigi

(57) **Abstract**

The invention concerns a system for different types of simple or complex heat treatment of vegetable products and like, comprising a pre-heating stage, an enzymatic inactivation or cooking stage and at least a cooling stage, characterised in that each stage comprises a supply element, a conduct, within which water flows, for advancing and subjecting to treatment the product, and an element for transferring the product to the following stage, or to the exit in case of the final stage, and in that it provides a circuit for recirculation and supply of water within said conducts of each stage, provided with means for conditioning water within said conducts in function of the working in each specific stage.

The invention further relates to other methods for thermal treatment or other treatments for vegetable products and like.

## Description

The present invention relates to a system and to a method for different types of simple or complex heat treatment of vegetable products and like.

More specifically, the invention concerns a system and a method of the above kind permitting realising, in an optimum way, pre-heating, cooking, enzymatic inactivation, cooling and other treatments of vegetable products. The above treatments can be single treatments or multiple treatments, on the basis of the working required.

For example, sometimes it is only necessary cooling the product, but in most cases the cycle is comprised of: pre-heating, enzymatic inactivation, and cooling. Obviously, other combinations are possible.

At present, in order to obtain the above treatment (pre-heating, enzymatic inactivation, and cooling), single block systems are used, dived into sections or stages. Their number is mainly linked to the exercise costs.

The higher is the number of stages, the lower are vapour and water consumption.

Product to be subjected to treatment advances in this systems divided in different stages counter-current with respect to treatment fluid. Treatment fluid, usually drinkable water, softened end demineralised, runs counter-current with respect to the product. Said flow makes a heat exchange in every stage provided: cooling, enzymatic inactivation, pre-heating of the product to be subjected to treatment.

Substantially cool water enter within the system according to a counter-current direction, passes, by communicating vessels principle through all stages, wherein, subtracting heat from the product, heats up to about 70°C.

Now water can maintain uniform level of enzymatic inactivation occurring at about 95°C, but its main function is that of passing over said stage and reaching last pre-heating stage, where, in counter-current will heat the product at about 65°C, and then, once terminated its function, exits from machine discharge.

It must be further noted that this kind of system must necessarily provide a mechanical system for advancing the product to be subjected to treatment.

Finally, it must be taken into consideration that in order to realise all working stages it is necessary realising a very bulky system; probably this is the main problem.

Recently, the Applicant has developed and realised a new technology, subject matter of the Italian Patent Application n° RM2006A000703 and European Patent Application EP 1 938 693, as well as in a corresponding US patent application, wherein a system is described for pasteurization thermal treatment of foodstuff, particularly leaf products, wherein the product is advanced along treatment sections providing ducts within which water flows, said water acting as means for advancing the product.

In view of the above mentioned problems, and starting from technology described in the above application EP '693, the Applicant has realised a system, and a relevant method, permitting obviating all the above drawbacks.

It is therefore specific object of the present invention a system for different types of simple or complex heat treatment of vegetable products and like, comprising a pre-heating stage, an enzymatic inactivation or cooking stage and at least a cooling stage, characterised in that each stage comprises a supply element, a conduct, within which water flows, for advancing and subjecting to treatment the product, and an element for transferring the product to the following stage, or to the exit in case of the final stage, and in that it provides a circuit for recirculation and supply of water within said conducts of each stage, provided with means for conditioning water within said conducts in function of the working in each specific stage.

Particularly, according to the invention, said system can be insulated.

Furthermore, according to the invention, said conducts of each stage provide a plurality of tracts joined by curves.

Always according to the invention, said conducts can have a mainly horizontal extension, or a mainly vertical extension, or can have an extension according to each direction.

Still according to the invention, said conducts can be comprised of smooth tubes, or of corrugated tubes, or of tubes having a different surface and section.

In an embodiment of the system according to the invention, said stages are provided in cascade.

In a further embodiment of the system according to the invention, said first cooling stage is provided raised with respect to said enzymatic inactivation stage, means being provided for pumping water along with the product from outlet of the enzymatic inactivation or cooking stage and the inlet of the first cooling stage.

Preferably, according to the invention, at least two pre-heating stages are provides, preferably three pre-heating stages.

Furthermore, according to the invention, said circuit for recirculation and supply of water within said conducts provides at least a heat exchanger in correspondence of the outlet cooling stage, a heat exchanger in correspondence of the enzymatic inactivation or cooking stage, and a heat exchanger in correspondence of said pre-heating stage.

The invention further concerns a method for different types of simple or complex heat treatment of vegetable products and like, comprising a pre-heating stage, an enzymatic inactivation or cooking stage and at least a cooling stage, characterised in that product, in each of said stages, is conveyed within the conducts, within which water flows (wherein liquid/solid ratio is determined to obtain the best heat exchange) at a suitable temperature in function of the treatment stage.

Present invention will be now described for illustrative, but not limitative purposes according to its preferred embodiments, with particular reference to the figures of the enclosed drawings, wherein:
figure 1 is a schematic view of the system according to the invention;
figure 2 schematically shows a first embodiment of the system according to the invention; and
figure 3 schematically shows a first embodiment of the system according to the invention.

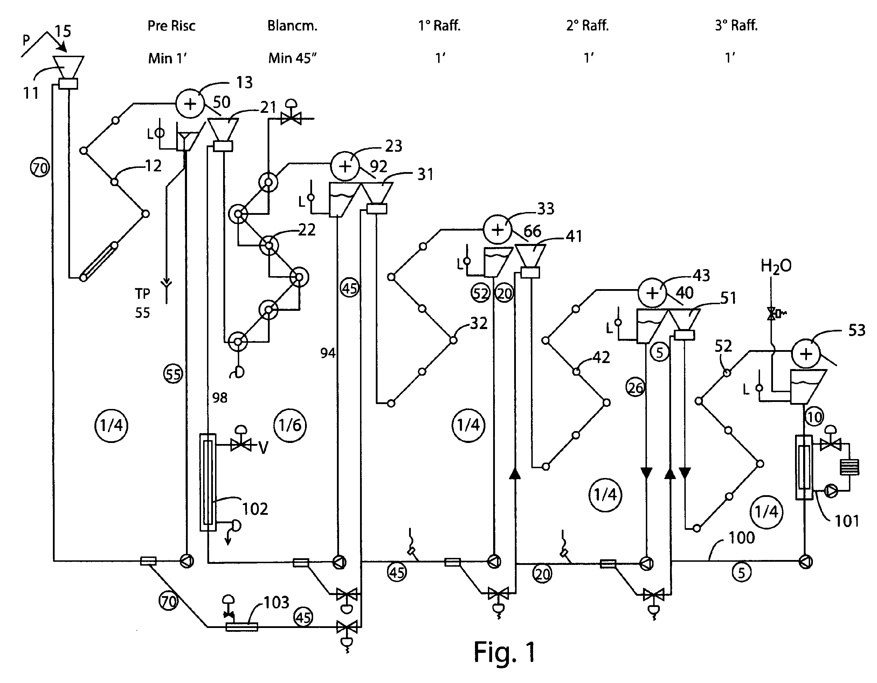

Observing first figure 1, it is schematically shown a system according to the invention, that, in the present embodiment, provides a pre-heating stage, an enzymatic inactivation stage or a cooking stage (also known as "blanching"), and three cooling stages.

Each stage provides a material supply, respectively indicated by reference numbers 11, 21, 31, 41, 51, a conduct 12, 22, 32, 42, 52 for passage of water and product, and a passage zone 13, 23, 33, 43, 53 of product and water between different stages.

System also provides tubes, generically indicated by reference number 110, for recirculating water. Particularly, following water circuit 100 from right to left in the figure, it is provided a first heat exchanger 101, downward exit of product subjected to treatment, a second heat exchanger 103, in the blanching stage, and a third heat exchanger 103, in a branch between first cooling stage and third cooling stage.

Time within each stage, inlet and outlet water temperature from each stage, as well as enter and outlet product temperature from each stage are indicated in figure 1.

Product enters from supplier 11 at a temperature of about 15°C, is transported by water within conduct 12 up to reaching, at the outlet, the pre-heating stage, after about 60", a temperature of about 50°C, thus entering through supplier 21 within conduct 22 of the blanching stage, with water heated by heat exchanger 102 up to about 98°C, for a time period of about 45", exiting at a temperature of about 92°C. conducts 12, 22, 32, 42, 52 can be corrugate to obtain a mixing of the product while it moves along the same.

Product now enters within the three cooling stages, up to exiting at a temperature of about 14°C.

System can be insulated to better control temperature of different stages.

By the system according to the invention it is possible obtaining many advantages with respect to known techniques.

First, by the system according to the invention, wherein product is transported by water and not by mechanical bands, it is possible changing the product to be subjected to treatment in a much more simple and quick way (substantially without any further operation required).

Furthermore, speed and production quality are obtained.

Remarkable advantages are further obtained as far as treatment hygiene is concerned.

Another advantage obtained by the system according to the invention is that maximum treatment uniformity for the entire product subjected to treatment. In fact, in known systems, wherein product is provided on a conveyor belt substantially as a heap, part of the product at the center of the heap cannot be subjected to treatment as it occurs to the product at the edges of the heap. On the contrary, solution suggested according to the invention permits subjecting the product to an absolutely uniform treatment.

Obviously, remarkable advantages are also mechanical advantages.

Another remarkable advantage obtained by the system according to the invention with respect to the known systems is the reduction of dimensions, and energy saving.

In the enclosed figures, conducts 12, 22, 32, 42, 52 are provided horizontally, but they can also be provided with a different orientation, without departing from the scope of the present invention.

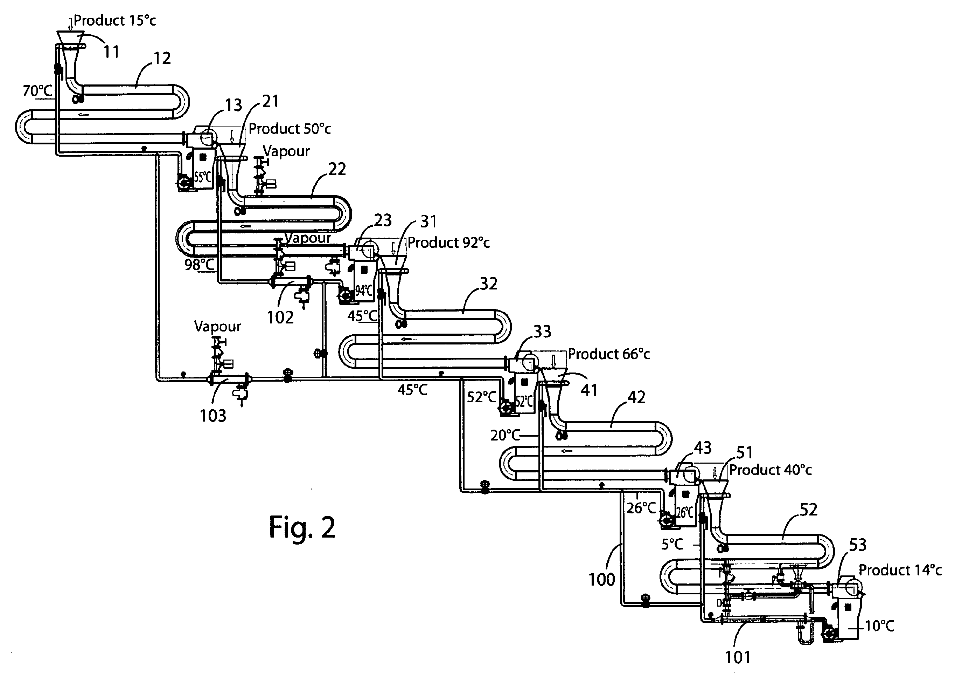

Observing now figure 2, it is shown a first embodiment of the system according to the invention, wherein the elements corresponding to those shown in figure 1 are indicated by the same references.

In this embodiment, different stages are provides in series, passage from one stage to another one occurring by gravity.

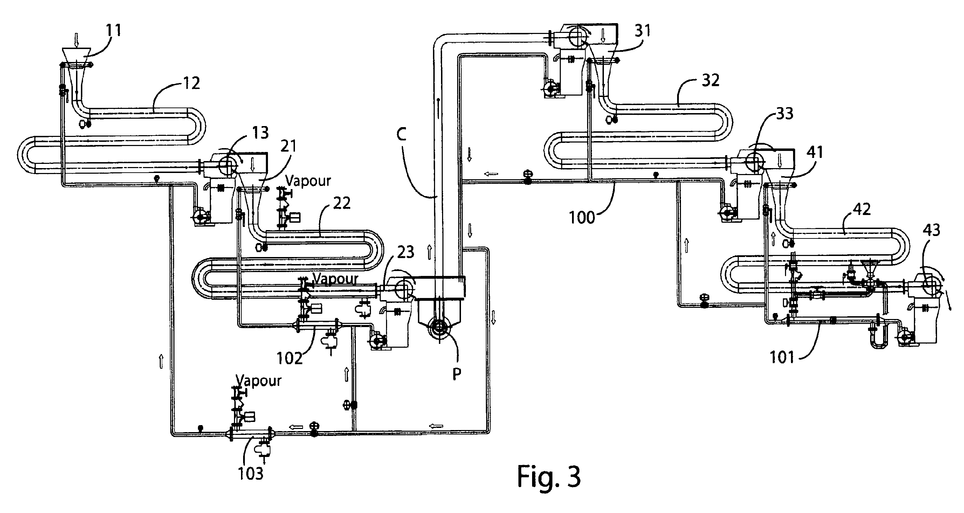

Instead, observing figure 3, it is noted that a pump P is provided between blanching stage and cooling stages, bringing product along lifting conduct C, from exit of blanching stage to inlet of first cooling stage.

Obviously, use of pump P involves a higher consumption of energy, which is compensated by a pre-cooling of the product along conduct C, so that energy consumption for cooling within three cooling stages is reduced, and by possibility of realizing the system with reduced height and dimensions.

By the system and the method according to the invention, many advantages are obtained, among which:
- elimination of mechanical transportation means;
- better hygiene of the system;
- possibility of carrying out a safe and easy cleaning;
- obtaining a uniform advancement, even with different and mixed products;
- quickness of change of product;
- quickness of heat exchange (some seconds);
- exercise reduced costs;
- reduced costs;
- possibility of modifying dimensions and production capacity of an existing system.

Present invention has been described for illustrative, but not limitative, purposes, according to its preferred embodiments, but it is to be understood that variations and/or modifications can be introduced by those skilled in the art without departing from the relevant scope, as defined in the enclosed claims.

## Claims

1. System for different types of simple or complex heat treatment of vegetable products and like, comprising a pre-heating stage, an enzymatic inactivation or cooking stage and at least a cooling stage, **characterised in that** each stage comprises a supply element, a conduct, within which water flows, for advancing and subjecting to treatment the product, and an element for transferring the product to the following stage, or to the exit in case of the final stage, and **in that** it provides a circuit for recirculation and supply of water within said conducts of each stage, provided with means for conditioning water within said conducts in function of the working in each specific stage.

2. System according to claim 1, **characterised in that** it is insulated.

3. System according to one of the preceding claims, **characterised in that** said conducts of each stage provide a plurality of tracts joined by curves.

4. System according to one of the preceding claims, **characterised in that** said conducts have a mainly horizontal extension.

5. System according to one of the preceding claims 1 - 3, **characterised in that** said conducts have a mainly vertical extension.

6. System according to one of the preceding claims 1 - 3, **characterised in that** said conducts have an extension according to each direction.

7. System according to one of the preceding claims, **characterised in that** said conducts are comprised of smooth tubes, or of corrugated tubes, or of tubes having a different surface and section.

8. System according to one of the preceding claims, **characterised in that** said stages are provided in cascade.

9. System according to one of the preceding claims 1 - 6, **characterised in that** said first cooling stage is provided raised with respect to said enzymatic inactivation stage, means being provided for pumping water along with the product from outlet of the enzymatic inactivation or cooking stage and the inlet of the first cooling stage.

10. System according to one of the preceding claims, **characterised in that** at least two pre-heating stages are provides, preferably three pre-heating stages.

11. System according to one of the preceding claims, **characterised in that** said circuit for recirculation and supply of water within said conducts provides at least a heat exchanger in correspondence of the outlet cooling stage, a heat exchanger in correspondence of the enzymatic inactivation or cooking stage, and a heat exchanger in correspondence of said pre-heating stage.

12. Method for different types of simple or complex heat treatment of vegetable products and like, comprising a pre-heating stage, an enzymatic inactivation or cooking stage and at least a cooling stage, **characterised in that** product, in each of said stages, is conveyed within the conducts, within which water flows (wherein liquid/solid ratio is determined to obtain the best heat exchange) at a suitable temperature in function of the treatment stage.
